# FASCICULE DE BREVET EUROPEEN

(11) **EP 0 394 622 B1**
(45) Date de publication et mention de la délivrance du brevet: **05.01.1994**
(21) Numéro de dépôt: 90102161.8
(22) Date de dépôt: 03.02.1990
(51) Int. Cl.: B01D 50/00, B01D 45/16, B01D 46/52

(54) **Procédé de filtration et filtre pour sa mise en oeuvre**
Verfahren und Einrichtung zur Filtration
Process and device for filtration

(30) Priorité: 26.04.1989 CH 1584/89
(43) Date de publication de la demande: 31.10.1990
(73) Titulaire: Andreae, Robert, CH-1141 Yens (CH)
(72) Inventeur: Andreae, Robert, CH-1141 Yens (CH)
(74) Mandataire: Micheli & Cie

(56) Documents cités:
- US-A- 4 008 060

## Description

La présente invention concerne un procédé de filtration et des filtres destinés à débarrasser un courant gazeux, généralement de l'air, de particules sèches ou humides en suspension dans ce courant pour sa mise en oeuvre. En particulier l'invention concerne plus particulièrement des filtres pour cabines de peinture.

Pour épurer de tels flux gazeux on procède généralement soit par filtration du type cyclonique, c'est-à-dire qu'on provoque une turbulence dans l'écoulement projettant des particules en suspension par effet centrifuge contre des parois, soit par tamisage, c'est-à-dire passage du flux à travers une paroi poreuse retenant les particules.

Les filtres actuels utilisés dans ce domaine doivent pouvoir être changés souvent et rapidement et les nouvelles normes exigent des taux de rétention supérieur à 90 % et allant même jusqu'à 99,5 % voir plus. Ces filtres se présentent donc comme des éléments amovibles destinés à être montés dans des cadres prévus à cet effet.

A l'heure actuelle on connaît deux types de filtres fonctionnant suivant deux principes différents.

D'une part les filtres réalisés par un matelas, généralement plan, d'un matériau poreux qui retiennent les particules en suspension dans le courant gazeux par tamisage. Ces filtres présentent deux défauts majeurs; il ne retiennent pas les particules plus petites que leurs mailles ou pores de sorte qu'ils sont soit trop peu efficaces, soit entraînent une trop grande perte de charge suivant que leurs mailles ou pores sont de grandes ou petites dimensions; ils s'encrassent très vite provoquant une augmentation rapide de la perte de charge nécessitant leur changement fréquent.

D'autre part les filtres en accordéon à double ou triple parois en matière étanche, généralement en carton, ces parois étant reliées le long d'un pli sur deux et présentant des dimensions différentes de sorte que des chambres sont créées entre les parois. Ces parois sont munies d'orifices qui ne sont pas alignés les uns sur les autres de manière à obliger le courant gazeux à tourbillonner dans les chambres du filtre provoquant par la force centrifuge ainsi appliquée aux particules, la projection de celles-ci contre les parois de ces chambres où elles se déposent. Un tel filtre est connu, par example, par le document FR-A-1 260 431. On connait aussi par US-A-4 008 060 un filtre en accordéon à triple paroi en matière étanche, la troisième paroi étant destinée notamment, à accroitre l'efficacité du filtre en imposant au courant gazeux un trajet sinueux supplémentaire. Ces filtres à "inertie" permettent d'assurer une perte de charge constante en fonction de leur temps d'utilisation mais présentent l'inconvénient de ne pas capter les particules légères dont la masse est insuffisante pour que la force centrifuge qui les affecte ne les projette contre les parois. Pour certains types de peinture, notamment des laques, ces filtres s'avèrent donc peu efficaces (50 à 60 % de rétention) et ne permettent pas d'atteindre les normes les plus sévères.

La présente invention a pour but un procédé de filtration et la réalisation d'un filtre à deux parois tendant à obvier aux inconvénients des filtres précités et qui permette à la fois d'atteindre une haute efficacité, supérieure à une plage située entre 86 % et 99,8 % de rétention suivant la catégorie de peinture et les conditions d'utilisation, d'éviter une augmentation sensible de la perte de charge en fonction de sa durée d'utilisation et d'avoir une relativement grande durée de vie, de l'ordre de celle des filtres à accordéon existants.

La présente invention a pour objet un procédé de filtration d'un courant gazeux souillé de particules en suspension, notamment d'un courant d'air chargé de particules ou goutellettes de peinture de différentes tailles, selon la revendication 1.

La présente invention a également pour objet un filtre tel que défini à la revendication 4.

Le dessin annexé illustre schématiquement et à titre d'exemple deux formes d'exécution du filtre selon l'invention.

La figure 1 est une coupe d'une première forme d'exécution du filtre selon la ligne I-I de la figure 2.

La figure 2 est une vue partielle de la première forme d'exécution du filtre, certaines parties de la paroi amont étant arrachées.

La figure 3 est une coupe similaire à celle de la figure 1 d'une seconde forme d'exécution du filtre.

Dans le procédé de filtration de l'invention les particules de plus grandes tailles par effet d'inertie ou centrifuge sont projettées contre les parois de la chambre et une partie au moins du flux gazeux est évacué hors de cette chambre au travers d'une paroi poreuse aval, captant ainsi les particules les plus fines.

La dimension des pores de cette paroi aval est déterminée en fonction de la dimension des particules les plus fines en suspension de manière à permettre une épuration du flux gazeux se rapprochant de 100 %. Ce procédé, mettant en oeuvre simultanément une filtration du type cyclonique, centrifuge ou à inertie et une filtration du type tamisage, permet d'atteindre des taux d'épuration encore inégalés du fait d'un effet de synergie entre les deux modes de filtration qui ne se laissait pas prévoir. De plus ce procédé permet d'épurer efficacement des flux gazeux transportant des particules de dimension très variable, grossières et fines ce qui ne peut pas toujours être réalisé avec un filtre à simple action. Enfin comme on le verra plus loin ce procédé de filtration peut être mis en oeuvre par un filtre simple dont on peut tirer un maximum d'efficacité, les deux modes de filtration affectant différentes zones du filtre.

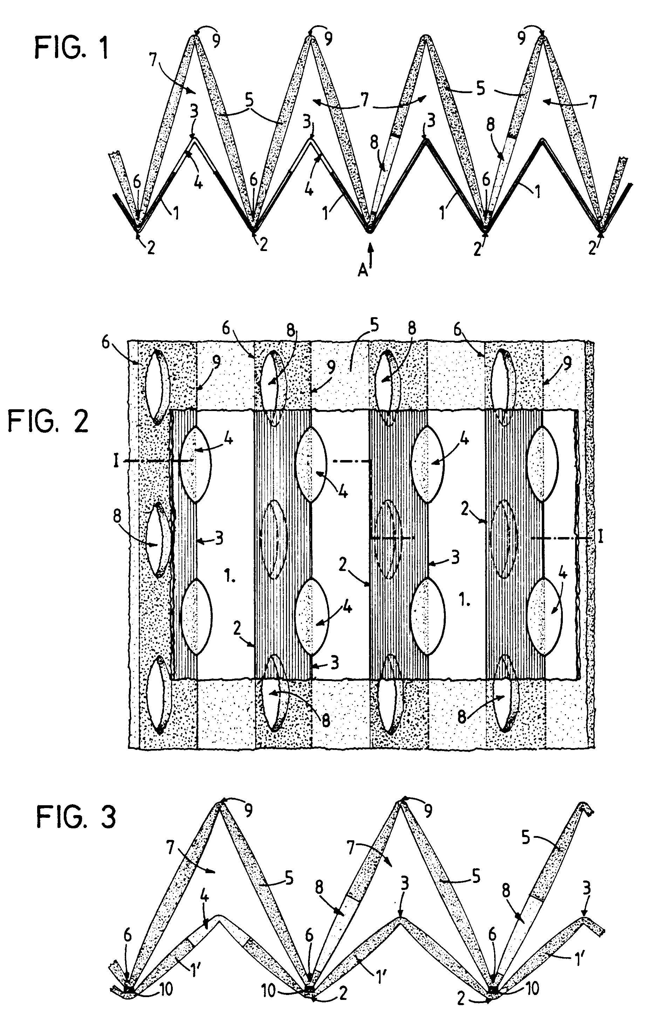

La première forme d'exécution du filtre, illustrée aux figures 1 et 2, comporte une première paroi, ou paroi amont 1, en papier ou carton munie de plis amont 2 et aval 3, le courant gazeux s'écoulant suivant la direction de la flèche A. Cette paroi amont 1, imperméable, est munie d'ouvertures 4 disposées dans l'exemple illustré en rangées et centrées sur les plis avals 3 de la paroi 1.

Ce filtre comporte une seconde paroi, ou paroi aval 5 également pliée en accordéon comme la paroi amont 1 mais dont la longueur totale, et donc également la longueur entre deux plis amont 6 sucessif, est plus grande que la longueur correspondante de la paroi amont 1. De cette façon des chambres 7 sont créées, qui présentent en coupe la forme générale d'un V, entre les deux parois 1 et 5. En effet, les parois 1 et 2 sont collées l'une à l'autre le long de leurs plis amonts 2,6. Cette paroi aval 5 est réalisée en un mat ou matelas de fibres synthétiques non tissés, par exemple en polyesther; elle est donc poreuse. Les pores ou interstices de cette paroi 5 sont toutefois de faibles dimensions de manière à retenir les plus fines particules. Enfin cette seconde paroi aval 5 comporte des ouvertures 8, décalées par rapport aux ouvertures 4 de la paroi amont 1. Dans l'exemple illustré ces ouvertures 8 de la seconde paroi 5 sont disposées en rangées, situées entre les rangées formées par les ouvertures 4, et sont pratiquées à proximité des plis amonts 6 de cette seconde paroi 5.

Ce nouveau filtre présente une efficacité accrue tout en ayant une durée de vie et une perte de charge normale c'est-à-dire du même ordre que les filtres du type accordéon préexistants.

L'efficacité accrue de ce filtre est due au fait qu'il combine deux principes actifs qui ont un effet de synergie. D'une part la turbulence créée dans l'écoulement du filtre gazeux projette les particules grossière contre les parois latérales des chambres 7 mais simultanément, les particules de faibles dimension et de faibles masses, qui ne subissent que faiblement l'effet de la turbulence et traversent le filtre suivant une trajectoire pratiquement rectiligne sont captées par "tamisage" par la paroi aval 5 dans la région des plis 9 de cette paroi 5.

On a constaté que l'effet de filtration par inertie, provoquant la projection des particules en suspension dans le courant gazeux contre les parois latérales des chambres 7, affecte surtout les portions médianes de ces parois latérales et très peu ou pas la zone proche des plis avals 9 de la seconde paroi 5. Ces zones proche des plis 9 par contre travaillent principalement suivant le principe du "tamisage" et retiennent les particules fines peu ou pas affectées par la turbulence du courant gazeux.

C'est cette superposition synergique des deux principes de filtration, par inertie et par tamisage, qui de surcroit n'affectent pas les mêmes zones de la seconde paroi 5 du filtre, qui permet d'obtenir cet effet inattendu; une efficacité supérieure de ce filtre du type accordéon bien que l'une de ses parois soit une paroi poreuse ce qui va à l'encontre des principes régissant la réalisation du filtre par inertie.

Ce résultat étonnant de prime abord peut s'expliquer au vu des essais réalisés avec de tels filtres du fait que les deux types de filtration mis en oeuvre conjointement n'affecte pas les mêmes parties de la seconde paroi 5.

Ainsi l'efficacité du filtre est renforcée, les particules fines peuvent également être captées, tout en assurant grâce aux ouvertures 4,8 une perte de charge pratiquement constante du filtre pendant toute sa durée d'utilisation. Grâce également à ces ouvertures 4,8 les pores de la paroi aval 5 peuvent être de faibles dimensions, sans augmenter la perte de charge ou limiter la durée d'utilisation du filtre, ce qui permet de capturer de très fines particules avec un filtre créant une faible perte de charge.

La synergie obtenue par la conjonction des filtrations par inertie et par tamisage est un résultat parfaitement étonnant et non prévisible ce qui explique pourquoi, bien que les filtres accordéons à inertie existent depuis des décénies, il n'est jamais venu à l'idée de personne de la branche de remplacer la paroi aval étanche d'un tel filtre par une paroi aval poreuse.

Ce nouveau filtre présente encore un avantage supplémentaire car il est possible de le réaliser de manière que la paroi aval 5 en mat de filtres synthétiques, soit légèrement plus grande que la paroi amont 1, notamment en hauteur. De ce fait ce surplus de matière compressible forme un joint d'étanchéité entre le filtre et le cadre qui le reçoit. Dans les filtres existants il est toujours nécessaire de prévoir un joint spécial car les variations de dimension du carton en fonction de l'hygrométrie ne permettent pas la réalisation d'un filtre aux dimensions suffisemment précises pour être fixé sans joint dans un cadre.

Dans la seconde forme d'exécution illustrée en coupe à la figure 3 la première paroi ou paroi amont 1' est également réalisée en fibres synthétiques non tissées, donc en un matériau poreux. Les trous 4 et 8 sont disposés de la même manière que dans la première forme d'exécution. Dans cette exécution le collage des plis amont 2,6 des parois 1' et 5 est obtenu par l'application à force des plis 2,6 contre une baguette 10 en matière plastique extrudée, à la sortie de la filière d'extrusion, c'est-à-dire à un moment où cette baguette est encore à une température suffisament élevée pour fondre et fusionner avec la matière synthétique, du polyesther généralement, constituant les fibres formant les mats non tissés des parois 1' et 5. En effet dans une telle réalisation où les deux parois sont en mats de fibres polyester non tissées, il est nécessaire d'assurer la rigidité du filtre dans le sens de sa hauteur à l'aide de nervures, ici les baguettes de matière synthétique extrudées.

Le fonctionnement de ce filtre est similaire à celui de la première forme d'exécution décrite au fait près que la première paroi amont 1' est poreuse et contribue également, dans un premier temps de la durée de vie du filtre au moins, à retenir par tamisage les parties fines et lègères.

## Revendications

1. Procédé de filtration d'un courant gazeux chargé de particules en suspension, notamment d'un courant d'air chargé de particules ou goutelettes de peinture de différentes tailles selon lequel on fait passer ce flux gazeux à travers deux parois de longueurs différentes formant au moins une chambre présentant en coupe transversale la forme d'un V dont les orifices d'entrée et de sortie sont décalés de manière à provoquer un écoulement tourbillonnaire, caractérisé par le fait que l'on utilise une paroi aval poreuse et des orifices d'entrée et de sortie décalés de façon telle quel'écoulement troubillonnaire provoque par effet d'inertie la projection des particules en suspension dans le courant gazeux de plus grande taille principalement contre les portions médianes des parois latérales de la chambre tandis que la zone centrale, proche du pli aval de la paroi aval poreuse de la chambre, retient par effet de tamisage les particules fines en suspension dans le courant gazeux.

2. Procédé selon la revendication 1, selon lequel on fait passer le flux gazeux au travers de chambres disposées côte à côte et s'étendant approximativement perpendiculairement au flux gazeux.

3. Procédé selon l'une des revendications 1 ou 2, caractérisé par le fait que la paroi amont des chambres est poreuse.

4. Filtre, pour la mise en oeuvre du procédé selon la revendication 1, notamment pour cabine de peinture, constitué par un filtre du type accordéon à deux parois de longueur différentes reliées l'une à l'autre le long d'un pli sur deux, soit le long des plis amonts, ces deux parois étant munies d'ouvertures, les ouvertures de la paroi amont étant disposées en rangées et axées chacune sur les plis aval de cette paroi amont et les ouvertures de la paroi aval étant situées à proximité des plis amont de cette paroi aval créant ainsi les conditions nécessaires à la formation d'un écoulement turbulent du flux gazeux dans les chambre situées entre les deux parois, caractérisé par le fait que la paroi aval est constituée par un mat de fibres poreux et par le fait que les ouvertures pratiquées dans cette paroi aval poreuse sont disposées en rangées, décalées dans le direction des plis par rapport aux ouvertures pratiquées dans la paroi amont.

5. Filtre selon la revendication 4, caractérisé par le fait que les deux parois amont et aval sont constituées par un mat de fibres poreux.

6. Filtre selon la revendication 4 ou la revendication 5, caractérisé par le fait que la ou les parois poreuses sont formées par un mat de fibres synthétiques non tissées.

7. Filtre selon la revendication 4, caractérisé par le fait que la paroi amont est réalisée en carton et que les deux parois sont collées le long de leurs plis amont.

8. Filtre selon la revendication 6, caractérisé par le fait que les parois amont et aval sont collées ou fusionnées sur ou avec des baguettes en matière plastique extrudées servant de nervures de raidissement au filtre.

## Claims

1. Method for the filtration of a gaseous flux charged with particles in suspension, particularly an air flow charged with particles or drops of paint of different sizes according to which this flow is passed through two walls of different lengths forming at least one chamber presenting in transverse cross-section the shape of a V the inlet and outlet openings of which are displaced in order to cause a turbulent flow characterized by the fact that one uses a downstream porous wall and inlet and outlet openings displaced in such a way that the turbulent flow causes by inertical effect the projection of the particles in suspension in the gaseous flux of greater size mainly against the middle portion of the lateral walls of the chamber whereas the central zone, near the downstream fold of the porous downstream wall of the chamber, retains by filtering effect the fine particles in suspension in the gaseous flux.

2. Method according to claim 1, in which the gaseous flux is passed through chambers located the one beside the other and extending approximately perpendicularly to the gaseous flux.

3. Method according to one of claims 1 or 2 caracterized by the fact that the upstream wall of the chambers is porous.

4. Filter to carry out and the method according to claim 1, particularly for painting cabins, formed by an accordean type filter having two walls of different lengths connected the one to the other along one of two folds, i.e. along the upstream folds, their two walls being provided with openings, the opening of the upstream wall being disposed in rows each centered on the downstream folds of this upstream wall and the openings of the downstream wall being located in the vicinity of the upstream folds of this downstream wall creating thus the conditions necessary for the formation of a turbulent flow of the gaseous flux in the chamber located between the two walls, characterized by the fact that the downstream wall is formed of a porous fiber mat and by the fact that the openings provided in said porous downstream wall are disposed in rows displaced in the direction of the folds with respect to the openings provided in the upstream wall.

5. Filter according to claim 4 characterized by the fact that the two down- and upstream walls are made of a porous mat of fibers.

6. Filter according to claim 4 or claim 5, characterized by the fact that the porous wall or walls are formed of a mat of synthetic non-woven fibers.

7. Filter according to claim 4, characterized by the fact that the upstream wall is made of cardboard and that the two walls are glued along their upstream folds.

8. Filter according to claim 6, characterized by the fac-that the up- and downstream walls are glued or fused onto or with extruded plastic material strips used as strengthening ribs for the filter.

## Patentansprüche

1. Verfahren zum Filtrieren eines Gasstroms mit Partikeln in Suspension, insbesondere eines Luftstroms mit Partikeln oder Farbtröpfchen verschiedener Grösse, gemäss welchem man einen Gasstrom durch zwei Wände dringen lässt, die von verschiedener Länge zumindest eine Kammer bilden, welche im Querschnitt die Form eines V aufweist, dessen Eingangs- und Ausgangsöffnungen verschoben sind, um eine Wirbelströmung zu bewirken, dadurch gekennzeichnet, dass man eine poröse hintere Wand und Eingangs- und Ausgangsöffnungen derartig verschoben verwendet, dass die Wirbelströmung durch Trägheitseffekt das Wegspritzen der Partikel von grösserem Durchmesser in Suspension im Gasstrom hauptsächlich gegen die mittleren Teile der Seitenwände der Kammer bewirkt, während dem die Zentralzone in der Nähe des hinteren Faltens der porösen hinteren Wand der Kammer durch Siebeffekt die feinen Partikel in Suspension im Gasstrom zurückhält.

2. Verfahren nach Anspruch 1, gemäss welchem man den Gasstrom durch Kammern fliessen lässt, die nebeneinander liegen und die sich ungefähr senkrecht zum Gasstrom ausdehnen.

3. Verfahren nach einem der Ansprüche 1 oder 2, dadurch gekennzeichnet, dass die vordere Wand der Kammern porös ist.

4. Filter zur Ausführung der Verfahrens nach Anspruch 1, insbesondere für Spritzkabinen, der aus einem Filter des Faltenbalgtyps besteht, mit zwei Wänden von verschiedener Länge, die entlang jedes zweiten Faltens, das heisst entlang der vorderen Falten, verbunden sind, wobei diese beiden Wände mit Öffnungen versehen sind, die Öffnungen der vorderen Wand in Reihen angeordnet sind und jede Öffnung auf die hinteren Falten dieser vorderen Wand ausgerichtet sind, und wobei sich die Öffnungen der hinteren Wand in der Nähe der forderen Falten dieser hinteren Wand befinden, um somit die zur Bildung einer Wirbelströmung des Gasstroms in der sich zwischen den zwei Wänden befindenden Kammer notwendigen Bedingungen zu schaffen, dadurch gekennzeichnet, dass die fordere Wand aus einer Matte von porösen Fibern besteht, und dass die in dieser hinteren porösen Wand angebrachten Öffnungen in Reihen angeordnet sind, die verschoben sind in Richtung der Falten gegenüber der in der vorderen Wand angebrachten Öffnungen.

5. Filter nach Anspruch 4, dadurch gekennzeichnet, dass beide vorderen und hinteren Wände aus einer Matte von porösen Fibern bestehen.

6. Filter nach Anspruch 4 oder Anspruch 5, dadurch gekennzeichnet, dass die poröse Wand oder die porösen Wände aus einer Matte von synthetischen, nicht geflochtenen Fibern bestehen.

7. Filter nach Anspruch 4, dadurch gekennzeichnet, dass die vordere Wand aus Karton gefertigt ist, und dass die beiden Wände entlang ihrer vorderen Falten zusammengeklebt sind.

8. Filter nach Anspruch 6, dadurch gekennzeichnet, dass die vorderen und hinteren Wände auf Stäbchen aus extrudiertem Plastikmaterial geklebt oder mit diesen verklebt sind, welche Stäbchen als Verstärkungsrippen des Filters dienen.
